# EUROPÄISCHE PATENTSCHRIFT

(11) **EP 1 111 269 B1**
(45) Veröffentlichungstag und Bekanntmachung des Hinweises auf die Patenterteilung: **29.06.2005**
(21) Anmeldenummer: 01105519.1
(22) Anmeldetag: 24.03.1999
(51) Int. Cl.: F16F 15/134, F16F 15/131

(54) **Torsionsschwingungsdämpfer**
Torsional vibration damper
Amortisseur de vibrations torsionelles

(30) Priorität: 22.04.1998 DE 19817910
(43) Veröffentlichungstag der Anmeldung: 27.06.2001
(62) Teilanmeldung aus: 99105882.7
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, Cand.-Ing., 52351 Düren (DE); Heidingsfeld, Dietmar, Dipl.-Ing., 52078 Aachen (DE)
(74) Vertreter: Castell, Klaus, Dr.

(56) Entgegenhaltungen:
- EP-A- 0 777 059
- DE-A- 4 117 579
- DE-A- 19 700 851
- DE-A- 19 708 819
- US-A- 4 813 295
- US-A- 5 649 348
- US-A- 5 779 550

## Beschreibung

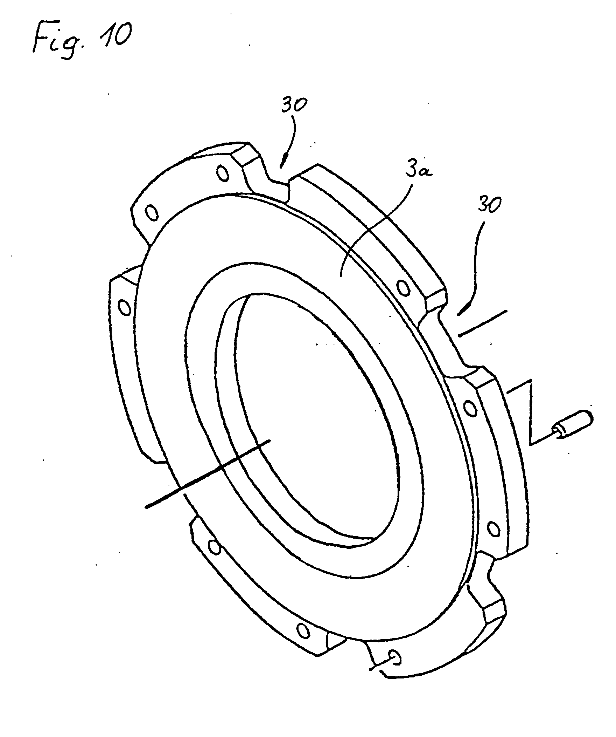

Vorliegende Erfindung betrifft einen Torsionsschwingungsdämpfer mit einer Primärmasse und einer Sekundärmasse. Ein derartiger Torsionsschwingungsdämpfer ist beispielsweise aus der DE 197 00 851A1 bekannt, wobei hierbei die Primärmasse und die Sekundärmasse über eine Federeinrichtung miteinander wechselwirken, die in Federkammern angeordnet ist. Hierbei ist bei den in Figuren 13 bis 15 dargestellten Ausführungsbeispielen zwischen der Primärmasse und der Sekundärmasse eine Abdichtung vorgesehen, welche an der Primärmasse befestigt ist und die Federnkammern zur Sekundärmasse hin abdichtet. Dokument EP-A-0 777 059 zeigt die Merkmale des Oberbegriffs von Anspruch 1.

Es ist Aufgabe vorliegende Erfindung, einen Torsionsschwingungsdämpfer bereit zu stellen, welcher mit der Wärmebelastung, welche durch die Reibungskupplung bedingt sein kann, umgeht.

Als Lösung schlägt die Erfindung einen Torsionsschwingungsdämpfer mit den Merkmalen des Anspruchs 1 vor. Durch die radialen Ausnehmungen in der Sekundärmasse, die sich über die Breite der Sekundärmasse nach radial außen öffnen, kann die Sekundärmasse einer Wärmebelastung folgend expandieren.

Die Primärmasse kann ein Primärblech umfassen, welches ein Drehmoment von der Primärmasse auf die Sekundärmasse überträgt. Die Verwendung eines Bleches zur Drehmomentübertragung gewährleistet eine einfache Herstellbarkeit dieser Baugruppe, da lediglich auf für Bleche notwendige Bearbeitungsverfahren zurückgegriffen werden braucht. Es ist insbesondere auch möglich, das Blech derart auszuformen, das auf eine spanende Bearbeitung zur Gänze verzichtet werden kann.

Die drehmomentübertragende Funktion des Primärblechs ermöglicht es, auf weitere Baugruppen, wie Stege, Hebel u. ä. zur Drehmomentübertragung zu verzichten. Das Primärblech kann derart ausgeformt sein, daß es die gesamte drehmomentsübertragende Funktion übernehmen kann. Insbesondere kann das Primärblech zumindest eine Abstützfläche mit einer senkrecht zur Umlaufrichtung des Torsionsschwingungsdämpfers weisenden Oberfläche aufweisen, die durch eine Ausformung des Primärblechs gebildet ist. Durch eine derartige, wie immer auch im konkreten ausgestaltete Abstützfläche können Kräfte in Umfangsrichtung von dem Primärblech ausgehend übertragen werden. Dieses kann z. B. in vorteilhafter Weise auf eine Schubkolben- und Federn umfassende Federanordnung, die zwischen Primär- und Sekundärmasse angeordnet ist, geschehen. Hierdurch wird es möglich, auf zusätzliche Baugruppen, die derartige Abstützflächen bereitstellen, zu verzichten.

Vorteilhafterweise ist das Primärblech als eine zur Hauptrotationsachse des Torsionsschwingungsdämpfers symmetrischeBaugruppe ausgeformt. Hierbeikann es sich um eine Rotations-, Achsen- oder Spiegelsymmetrie handeln. Eine derartige Anordnung erhöht zum einen die Stabilität des Primärblechs in sich und gewährleistet zum anderen eine einfache Herstellung des erfindungsgemäßen Torsionsschwingungsdämpfers, da einerseits die Gefahr möglicher Unwuchten und deren zeitaufwendige Beseitigung minimiert wird und andererseits eine derartig einstückige Baugruppe wesentlich einfacher an weiteren Baugruppen, wie z. B. einer Zusatzmasse, positioniert und befestigt werden kann, als dieses bei mehrteiligen Baugruppen der Fall wäre.

Des weiteren kann das Primärblech tangentiale Reibflächen aufweisen, die insbesondere zwischen den Ausformungen des Primärblechs angeordnet sein können. Hierbei werden unter tangentialen Reibflächen Oberflächenbereiche des Primärblechs verstanden, die in zumindest einer Komponente in Umfangrichtung weisen und reibend mit einer Drehmoment aufnehmenden Baugruppe, wie z. B. den Schubkolben einer Federanordnung, in Verbindung stehen.

Insbesondere durch die Kombination von tangentialen Reibflächen und Ausformungen mit Abstützflächen ist das Primärblech in der Lage, das gesamte Drehmoment von der Primärmasse ausgehend weiterzuleiten bzw. aufzunehmen. Dieses geschieht in besonders vorteilhafter Weise im Zusammenhang mit Schubkolben, die an den tangentialen Reibflächen anliegen und jeweils paarweise durch Federn auseinander und gegen die Abstützflächen gedrückt werden. Die Schubkolben können aus einem Vollspritzguß oder einem faserverstärkten Spritzguß gebildet und/oder mit Rippen versehen sein. Durch geeignete Wahl des Schubkolbenmaterials sowie der Anstellwinkel der tangentialen Reibflächen bezüglich der Umfangsrichtung kann der erfindungsgemäße Torsionsschwingungsdämpfer derart ausgestaltet werden, daß auf Fett bzw. ähnliche Gleitmittel im Bereich der Schubkolben verzichtet werden kann. Hierdurch lassen sich ggf. vorhandene Abdichtungsprobleme umgehen.

Um andererseits an dem Primärblech eine Abdichtung der durch die tangentialen Reibflächen und die Ausformungen gebildeten Räume gegen ein Ausdringen von Fett zu ermöglichen, kann das Primärblech einen zylinderförmigen Ansatzbereich aufweisen. An diesem Ansatzbereich kann dann eine Baugruppe, z. B. ein Dichtring, in verhältnismäßig unkomplizierter Weise befestigt werden.

Insbesondere ist es von Vorteil, wenn der zylinderförmige Ansatzbereich als Flansch ausgebildet ist. Zum einen kann dann die zu befestigende Baugruppe, z. B. die Dichtung, einfach - z. B. durch Anklipsen - an dem Flansch befestigt werden. Zum anderen ermöglicht ein derartiger Flansch weitere Baugruppen, wie z. B. eine an dem Primärblech zu befestigende Zusatzmasse, in axialer Richtung, also parallel zur Hauptrotationsachse des Torsionsschwingungsdämpfers, zu stabilisieren.

Je nach Anforderungen an die Stabilität der Verbindung zwischen Primärblech und der zu befestigenden Baugruppe, z. B. der Dichtung, kann es notwendig sein, das Primärblech im zylinderförmigen Ansatzbereich einer formgebenden Nachbehandlung, wie z. B. einer spanenden Bearbeitung zu unterziehen. Eine derartige Nachbehandlung, bei der unter Umständen das Primärblech zusätzlich eingespannt werden muß, ändert jedoch nichts an dem durch das Primärblech ermöglichten Vorteil einer Minimierung der Bauteilanzahl und einer verhältnismäßig leichten Herstellbarkeit.

Aus Stabilitätsgründen kann das Primärblech radial innen an einem Zentralflansch oder einer Welle, z. B. der Antriebswelle eines Motors, abgestützt sein. Hierbei kann es möglicherweise erforderlich werden, auch eine formgebende Nachbehandlung eines radial innenliegenden Bereiches des Primärblechs vorzunehmen. Auch eine derartige Nachbehandlung steht dem erfindungsgemäßen Vorteil der Verwendung eines Primärblechs nicht hindernd entgegen und läßt sich auf ein notwendiges Mindestmaß beschränken.

Es versteht sich, daß vorliegende Erfindung nicht auf die Verwendung eines Bleches im engeren Sinne beschränkt ist. Vielmehr kann als Primärblech jede blechartige Struktur dienen, die durch Umformen in die gewünschte Form gebracht worden ist. Hierbei versteht es sich, daß das Primärblech darüber hinaus weiteren Verfahrensschritten, insbesondere spanabhebenden bzw. materialentfernenden Verfahrensschritten, unterzogen werden kann.

An dem Primärblech kann in einem Umformungsschritt ein im wesentlichen parallel zur Hauptrotationsachse des Torsionsschwingungsdämpfers angeordneter, abgewinkelter Bereich erzeugt werden. Derartige abgewinkelte Bereiche dienen einerseits einer unmittelbaren Stabilisierung des Primärblechs. Zum anderen kann an diesen abgewinkelten Bereichen eine Zusatzmasse zur Anlage gebracht werden. Dies bedingt eine verhältnismäßig große Kontaktfläche zwischen Zusatzmasse und Primärblech, die einer weiteren Stabilisierung des Torsionsschwingungsdämpfers dient.

Die der Zusatzmasse abgewandte Seite des abgewinkelten Bereichs kann darüber hinaus in vorteilhafter Weise als tangentiale Reibfläche für die Drehmomentsübertragung bzw. Dämpfung genutzt werden. Auch ist es möglich, in dem abgewinkelten Bereich radial nach innen weisende Ausformungen vorzusehen, die als Abstützflächen dienen. Insofern können in einem Arbeitsgang der abgewinkelte Bereich zum Abstützen der Zusatzmasse sowie die tangentialen Reibflächen und Abstützflächen zur Drehmomentsübertragung und zur Dämpfung bereitgestellt werden.

Es versteht sich andererseits, daß die Bereitstellung eines abgewinkelten Bereiches an einem eine Zusatzmasse tragenden Blech eines Torsionsschwingungsdämpfers unabhängig von dessen Eigenschaft zur Drehmomentsübertragung den Torsionsschwingungsdämpfer in vorteilhafter Weise stabilisiert.

Die Zusatzmasse kann nach deren Aufsetzen auf den abgewinkelten Bereich auf das Primärblech aufgeschrumpft und/oder mit dem Primärblech punktverschweißt bzw. punktförmig verschweißt werden. Hierdurch wird in einfacher Weise eine stabile und dennoch ausreichend elastische Verbindung zwischen Zusatzmasse und Primärblech bereitgestellt.

Darüber hinaus gewährleistet die vorgenannte Anordnung zwischen Zusatzmasse und Primärblech eine einfache Herstellung derselben. Lediglich die radial innenliegenden, mit dem Primärblech in Kontakt kommenden Bereich der Zusatzmasse bedürfen einer entsprechenden Paßgenauigkeit. Selbiges gilt für die radiale Außenseite der abgewinkelten Bereiche des Primärblechs. Insofern ermöglicht diese Anordnung eine Beschränkung der kalibrierenden Nachbearbeitung beider Baugruppen vor deren Zusammensetzung auf ein Minimum, nämlich die vorgenannten Bereiche. Wegen der gewissen Eigenelastizität des Primärblechs und insbesondere bei einem Aufschrumpfen der Zusatzmasse auf das Primärblech kann unter Umständen auf eine spanende Nachbearbeitung zur Gänze verzichtet werden.

Die erfinderische Grundidee der funktionalen Trennung zwischen Drehmoment übertragendem Primärblech und Trägheitsmoment bereitstellender Zusatzmasse ermöglicht es, die Zusatzmasse im Hinblick auf eine möglichst effektive Bereitstellung einer Trägheitsmasse auszuformen. So kann die Zusatzmasse, insbesondere bei kleinen Stückzahlen, ein Grußteil, vorzugsweise aus Gußstahl, sein. Da jedoch die Anforderungen an die Festigkeit der Zusatzmasse nicht übermäßig hoch sind, kann die Zusatzmasse auch aus einem abgelängten Profil- oder Flachstahl erzeugt werden. Ein derartiges Halbzeug wird dann gebogen und an seinen Enden verbunden, vorzugsweise verschweißt, um die im wesentlichen zylinderförmige Zusatzmasse bereitzustellen. Ein derartiges Herstellungsverfahren für die Zusatzmasse eignet sich insbesondere für große Stückzahlen.

Hierbei ist es möglich, den Flachstahl bereits in der geeigneten Profilierung bereitzustellen. Andererseits kann sowohl vor als auch während bzw. nach dem Biegen noch eine Umformung, wie z. B. eine Kaltverformung, vorgenommen werden.

Insbesondere kann die Zusatzmasse nach dem Verbinden der beiden Enden des gebogenen Profil- bzw. Flachstahls noch kalibrierend bearbeitet werden, um ein Verbinden mit dem Primärblech zu erleichtern. Insbesondere kann dieser Verfahrensschritt ein Abspanen und/oder Kaltpressen der an dem abgewinkelten Bereich des Primärblechs anliegenden Bereiche umfassen.

Es ist auch möglich, statt des Profil- bzw. Flachstahls ein Rohr zu verwenden, welches entsprechend gewalzt und in Form eines Ringes gebracht wird.

Radial außen kann an der Zusatzmasse ein Anlasserzahnkranz angebracht sein. Das Anbringen erfolgt vorzugsweise vor der kalibrierenden Bearbeitung der Zusatzmasse, so daß die hierdurch gebildete Baugruppe in einem Arbeitsschritt kalibriert wird.

Die bauliche Trennung zwischen Anlasserzahnkranz und Zusatzmasse ermöglicht zum einen eine einfachere Herstellbarkeit der Gesamtanordnung und zum anderen eine höhere Variabilität bei der Anpassung an spezielle Kundenwünsche, z. B. in Bezug auf die Größe des Drehmoments oder den Radius des Anlasserzahnkranzes. Insofern versteht es sich, daß diese bauliche Trennung auch unabhängig von den übrigen Merkmalen des erfindungsgemäßen Torsionsschwingungsdämpfers vorteilhaft Verwendung finden kann.

Da von dem Anlasserzahnkranz auf die Zusatzmasse übertragene Kräfte unmittelbar auf das Primärblech weitergeleitet werden und die Zusatzmasse einerseits durch den Anlasserzahnkranz und andererseits durch das Primärblech abgestützt ist, ist die Belastung der Zusatzmasse im Falle, daß der Anlasserzahnkranz genutzt wird, nicht übermäßig hoch. Insofern stellt die Anordnung des Anlasserzahnkranzes an der Zusatzmasse keine übermäßigen Anforderungen an die Stabilität und Eigenfestigkeit der Zusatzmasse selbst, und es kann, trotz daß ein gewisses Drehmoment von der Zusatzmasse übertragen werden muß, die oben beschriebene Ausgestaltung der Zusatzmasse beibehalten werden.

Ein Auswuchten der Primärmasse kann am einfachsten durch geeignete Fräsungen oder Bohrungen in die Zusatzmasse erfolgen. Insbesondere können diese Fräsungen oder Bohrungen in einem radialen Oberflächenbereich der Zusatzmasse angeordnet sein. Hierdurch ist es in besonders einfacher Weise möglich, über die beim Auswuchten vorgenommenen Veränderungen, wie z. B. den Fräsungen oder Bohrungen, ein Abdeckblech anzubringen. Dieses kann dann von einer Seite, im wesentlichen ringförmig ausgestaltet, einfach an der Primärmasse angebracht werden. Es versteht sich andererseits, daß auswuchtende Maßnahmen auch an anderen Bereichen der Primärmasse vorgenommen und in erfindungsgemäßer Weise durch ein Abdeckblech abgedeckt werden können.

Häufig sind an den Primärmassen gattungsgemäßer Torsionsschwingungsdämpfer Signaleinrichtungen, z. B. Bohrungen, Löcher oder Stifte, vorgesehen, die einer Motorsteuerung, die Lage des Torsionsschwingungsdämpfers und somit einer diesen treibenden Kurbelwelle anzugeben. Hierbei haben in der Zusatzmasse vorgesehene Löcher den Nachteil, die Auswuchtung der Primärmasse zu beeinflussen. In einem Seitenblech des Torsionsschwingungsdämpfers vorgesehene Löcher hingegen können zu Abdichtungsproblemen führen. Werden statt dessen Stifte verwendet, so muß für diese ein zusätzlicher Raum vorgesehen werden, und es besteht die Gefahr, daß die hervorstehenden Stifte zu Verletzungen führen oder in unerwünschter Weise mit anderen Gegenständen in Kontakt kommen.

Um diesen Nachteilen zu begegnen, kann an dem Torsionsschwingungsdämpfer ein Geberblech vorgesehen sein, welches an der Primärmasse des Torsionsschwingungsdämpfers angebracht ist. Hierdurch ist zum einen eine einfache Montage der Gesamtanordnung gewährleistet. Zum anderen kann die Gesamtanordnung wesentlich einfacher individuellen Kundenwünschen angepaßt werden, da lediglich auf dem Geberblech vorhandene Signalgeber den Kundenwünschen angepaßt werden müssen.

Vorzugsweise dient das Geberblech gleichzeitig als Abdeckblech für durch das Auswuchten der Primärmasse bedingte Maßnahmen, wie Fräsungen und/oder Bohrungen bzw. angebrachte Zusatzmassen.

Vorzugsweise weist das Geberblech als Signalgeber Löcher auf. Zum einen werden hierdurch etwaige hervorstehende Baugruppen vermieden. Zum anderen haben diese Löcher keinen nachteiligen Einfluß auf die übrigen Baugruppen des Torsionsschwingungsdämpfers. So können sie nicht zu Abdichtungsproblemen führen und beeinflussen die Auswuchtung des gesamten Torsionsschwingungsdämpfers wegen der geringen Blechstärke nur unwesentlich.

Vorzugweise ist das Geberblech an wenigstens einer im wesentlichen radialen Oberfläche der Primärmasse befestigt. Zum einen gewährleistet dieses eine verhältnismäßig unkomplizierte Befestigung, und es brauchen zum anderen keine zusätzlichen Ausformungen oder Befestigungspunkte an der Primärmasse vorgesehen werden, da derartige radiale Oberflächen bei rotierenden Bauteilen, die keine unnötig große axiale Erstreckung aufweisen sollen, naturgemäß vorhanden sind.

Insbesondere kann das Geberblech sowohl an einem Primärblech als auch an einer Zusatzmasse der Primärmasse befestigt sein. Dieses gewährleistet zum einen eine sichere Befestigung des Geberbleches selbst. Zum anderen kann auf diese Weise das Geberblech der Fixierung der Zusatzmasse an dem Primärblech dienen. Eine derartige Anordnung erweist sich insbesondere dann als vorteilhaft, wenn die Zusatzmasse in eine axiale Richtung durch einen Flansch des Primärblechs fixiert wird. In diesem Falle kann die Fixierung in die andere axiale Richtung durch das Geberblech erfolgen. Dieses bedingt eine einfache Herstellbarkeit einer derartigen Anordnung, da lediglich die Zusatzmasse auf die Primärmasse aufgesetzt werden braucht und dann durch Befestigen des Geberblechs an der Primärmasse bereits eine Befestigung der Zusatzmasse erfolgt.

Um die Herstellung eines Torsionsschwingungsdämpfers weiterhin zu erleichtern, wird vorgeschlagen, in der Sekundärmasse radiale Ausnehmungen vorzusehen. Derartige Ausnehmungen erhöhen in vorteilhafter Weise die Widerstandskraft der Sekundärmasse gegen Wärmebelastung. Da derartige Torsionsschwingungsdämpfer häufig bei Kupplungen Anwendung finden und Kuppelvorgänge verhältnismäßig hohe Wärmeenergien freisetzen, unterliegt insbesondere die Sekundärmasse einer verhältnismäßig hohen Wärmebelastung. Die erfindungsgemäßen, radialen Ausnehmungen reduzieren die bei einer derartigen Wärmebelastung auftretenden Materialspannungen, so daß die Sekundärmasse aus einem weniger wärmeunempfindlichen Werkstoff gefertigt werden kann. Ein solcher Werkstoff ist in der Regel wesentlich einfacher zu verarbeiten als hochfeste und hochwärmeresistente Werkstoffe. Insbesondere ist es möglich, eine erfindungsgemäße Sekundärmasse aus Grauguß zu fertigen.

Als radiale Ausnehmungen können Einschnitte oder aber auch Vertiefungen u. ä. dienen, die geeignet sind, wärmebedingte Spannungen zu reduzieren. Dieses betrifft insbesondere Materialspannungen, die durch von radial innen aufgebrachte Wäremeenergien bedingt sind.

Um Wärmeenergien besser begegnen zu können, wird des weiteren ein Torsionsschwingungsdämpfer mit einer Primär- und einer Sekundärmasse vorgeschlagen, die mittels eines Gleitlagers gegeneinander drehbeweglich gelagert sind, welches eine Gleitfläche aus einem Polyamid, vorzugsweise aus PA 4.6 (Stanyl) umfaßt. Insbesondere kann dieses Material durch Zusätze, insbesondere hinsichtlich seiner Gleiteigenschaften, variiert und verstärkt sein.

Das Temperaturverhalten eines Torsionsschwingungsdämpfers mit einer Primärmasse und einer Sekundärmasse läßt sich des weiteren durch ein Gleitlager zwischen Pirmär- und Sekundärmasse mit in Umfangsrichtung zumindest teilweise unterbrochener Lagerbuchse verbessern. Bei einer derartigen Anordnung kann sich die Lagerbuchse in Umfangsrichtung ausdehnen, wodurch das Lager weniger belastet wird und sich die Betriebseigenschaften des Torsionsschwingungsdämpfers verbessern.

Ein verbessertes Verhalten unter thermischer Beanspruchung zeigt auch ein Torsionsschwingungsdämpfer mit einer Primärmasse und einer Sekundärmasse, welcher ein Gleitlager zwischen Primär- und Sekundärmasse mit in Umfangsrichtung längsgeschlitzter Lagerbuchse umfaßt. Neben einem verbesserten Verhalten unter thermischer Beanspruchung hat diese Anordnung darüber hinaus den Vorteil, daß die Lagerbuchse aus wenigstens zwei axial zueinander angeordneten Teilstücken besteht und entsprechend einfach von verschiedenen axialen Seiten an einer Baugruppe montiert werden kann, die durch die Lagerbuchse umschlossen wird.

Die verbesserten Eigenschaften obiger Anordnungen unter Wärmebelastung ermöglichen es, für die Lagerbuchse Materialien zu verwenden, die eine verhältnismäßig hohe Wärmeausdehnung zeigen. Auf diese Weise können insbesondere einfacher zu verarbeitende oder aber speziell an Kundenwünsche angepaßte Werkstoffe Verwendung finden.

Insbesondere kann das Gleitlager einen Gleitring mit im wesentlichen L-förmigem Querschnitt umfassen. Eine derartige Lagerbuchse läßt sich verhältnismäßig einfach montieren, da diese lediglich in eine entsprechende Nut eingelegt werden muß. Dieser Gleitring kann auch aus einer Gleitbuchse mit im wesentlichen zylinderförmigem Querschnitt und einer im wesentlichen radial ausgerichteten Gleitscheibe zusammengesetzt sein. Dieses ermöglicht zum einen eine größere Freiheit des Gleitringes bei einer Wärmeausdehnung und zum anderen eine größere Variabilität in der Ausgestaltung des Gleitlagers, da Gleitbuchse und Gleitscheibe je nach Anforderungen aus unterschiedlichen Materialien gewählt werden können.

Der Gleitring mit im wesentlichen L-förmigem Querschnitt gewährleistet eine gleitende Lagerung in radiale Richtung sowie eine eine axiale Richtung. Sollte dieses nicht ausreichen, kann z. B. ein zweiter Gleitring mit im wesentlichen L-förmigem Querschnitt vorgesehen sein, der derart dem ersten Gleitring gegenüberliegend angeordnet ist, daß eine Lagerbuchse mit im wesentlichen U-förmigem Querschnitt entsteht. Durch die Verwendung zweier gleicher Gleitringe kann eine verhältnismäßig kostengünstige und dennoch sowohl in radialer als auch in beide axiale Richtungen gleitend lagernde Lagerung zwischen Primär- und Sekundärmasse gewährleistet werden. Andererseits kann eine im wesentlichen radial angeordnete Gleitscheibe vorgesehen sein, die derart angeordnet ist, daß eine im wesentlichen U-förmige Lagerbuchse entsteht. Hierdurch wird ebenfalls eine gleitende Lagerung sowohl in radialer Richtung als auch in beiden axialen Richtungen gewährleistet. Darüber hinaus kann die Gleitscheibe aus einem anderen Material als der Gleitring gebildet sein und so den an dieser Stelle auftretenden Beanspruchungen geeignet und kostengünstig angepaßt werden.

Um die Anpaßbarkeit eines Torsionsschwingungsdrämpfers mit einer Primärmasse und einer Sekundärmasse, die über eine Schubkolbenfederanordnung miteinander wechselwirken, zu erhöhen, kann die Schubkolbenfederanordnung wenigenstens zwei Schubkolbenfedereinrichtungen umfassen, die unterschiedliche Feder-Dämpfungs-Charakteristiken aufweisen. Bei kleinen Verdrehwinkeln zwischen Primär- und Sekundärmasse bzw. bei kleinen Drehmomenten wird bei einer derartigen Anordnung in der Regel das Feder-Dämpfüngs-Verhalten eines derartigen Torsionsschwingungsdämpfers durch eine der beiden Schubkolbenfedereinrichtungen beherrscht, während bei größeren Verdrehwinkeln bzw. Drehmomenten überwiegend die Eigenschaften der zweiten Schubkolbenfedereinrichtung zur Geltung kommen. Dieses ermöglicht eine größere Variabilität in der Anpassung an besondere Kundenwünsche.

Hierbei können die beiden Schubkolbenfedereinrichtungen parallel oder in Reihe zwischen Primärmasse und Sekundärmasse geschaltet werden. Bei einer Reihenschaltung kann dieses insbesondere durch eine Zwischenbaugruppe ermöglicht werden, die einerseits mit der ersten Schubkolbenfedereinrichtung und andererseits mit der zweiten Schubkolbenfedereinrichtung wechselwirkt, während die erste Schubkolbenfedereinrichtung ihrerseits mit der Primärmasse und die zweite Schubkolbenfedereinrichtung ihrerseits mit der Sekundärmasse wechselwirken.

Darüber hinaus kann wenigstens ein Anschlag vorgesehen sein, der eine Kompression einer der Schubkolbenfedereinrichtungen über einen bestimmten Verdrehwinkel hinaus verhindert. Dieses betrifft insbesondere die auf niedrigere Drehmomente ansprechende Schubkolbenfedereinrichtung, bei welcher auf diese Weise eine unnötige Überlastung vermieden wird. Insbesondere kann auf diese Weise die Wirkung dieser Schubkolbenfedereinrichtung ab einem bestimmten Verdrehwinkel ausgeschaltet werden.

Der Anschlag kann z. B. zwischen der Primär- oder Sekundärmasse und der Zwischenbaugruppe vorgesehen sein. Andererseits kann ein derartiger Anschlag an jeder beliebigen Position des Torsionsschwingungsdämpfers angebracht sein, solange er in gewünschter Weise eine über einen bestimmten Verdrehwinkel hinausgehende Kompression der entsprechenden Schubkolbenfedereinrichtung verhindert.

Es ist desweiteren möglich, einen erfindungsgemäßen Torsionsschwingungsdämpfer derart auszulegen, daß in den Räumen, in welchen die Federn - und somit auch die Schubkolben - angeordnet sind, kein Fett vonnöten ist. Dieses kann insbesondere dadurch geschehen, daß die Materialien für die Schubkolben und für die mit den Schubkolben in Kontakt kommenden Oberflächen in geeigneter Weise gewählt werden. Darüber hinaus können aber auch die wirksamen Winkel zwischen den Schubkolben und diesen Flächen entsprechend ausgestaltet sein. Während gegenwärtig Anstellwinkel zwischen 4 und 6° angewendet werden, können dieses Winkel auf über 10° gewählt werden. Hierbei bezeichnet der Begriff Anstellwinkel den wirksamen Keilwinkel des Schubkolbens zwischen den beiden auf ihn wirkenden Oberflächen der antreibenden beziehungsweise abtreibenden Baugruppen.

Die Schubkolben können aus Kunststoff gebildet werden. Darüber hinaus können in den Schubkolben Innenrippen oder ähnliches vorgesehen sein, so daß diese unnötigen Materialspannungen nicht unteliegen. Es sind aber auch andere Ausgestaltungen der Schubkolben möglich, um zu vermeiden, daß diese als Vollkörper vorliegen und aus diesem Grunde inneren Materialspannungen ausgesetzt sind.

Weitere Vorteile, Ziele und Eigenschaften vorliegender Erfindung werden in nachfolgender Beschreibung anliegender Zeichnung verdeutlicht, in welcher beispielhaft zwei Torsionsschwingungsdämpfer sowie drei Lagerbuchsenanordnungen, bei denen es sich um Beispiele handelt, welche das Verstehen der Erfindung erleichtern sollen, sowie eine erfindungsgemäße Sekundärmaße dargestellt sind.

In der Zeichnung zeigen
- Figur 1: einen beispielhaften Torsionsschwingungsdämpfer im Schnitt entlang der Linie A - A in Figur 2,
- Figur 2: den Torsionsschwingungsdämpfer nach Figur 1 im Schnitt entlang der Linie B - B in Figur 1,

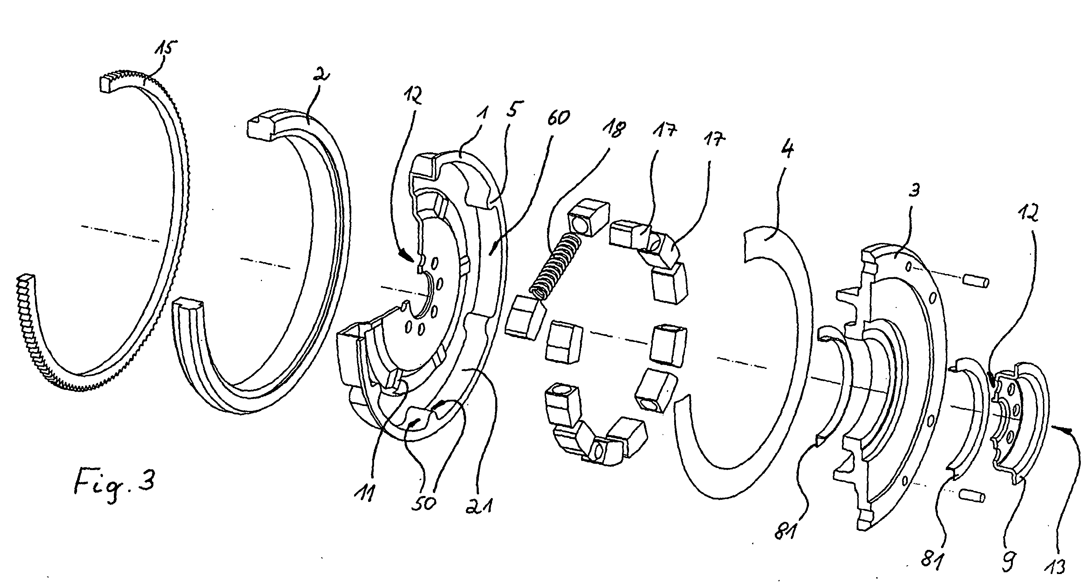

- Figur 3: den Torsionsschwingungsdämpfer nach Figur 1 in Explosionsansicht,
- Figur 4: die Lagerbuchse des Torsionsschwingungsdämpfers nach Figur 1 im Schnitt,
- Figur 5: eine zweite Lagerbuchse in ähnlicher Darstellung wie in Figur 4,
- Figur 6: eine dritte Lagerbuchse in ähnlicher Darstellung wie Figur 4,
- Figur 7: eine zweite Ausführungsform des Torsionsschwingungsdämpfers in ähnlicher Darstellung wie Figur 2,
- Figur 8: den Torsionsschwingungsdämpfer nach Figur 7 in ähnlicher Darstellung wie Figur 1,
- Figur 9: den Torsionsschwingungsdämpfer nach Figuren 7 und 8 in ähnlicher Darstellung wie Figur 8 mit einem Drehmoment belastet und
- Figur 10: eine perspektivische Schemadarstellung einer erfindungsgemäßen Sekundärmasse.

Der Torsionsschwingungsdämpfer umfaßt ein Primärblech 1, welches fest mit einer Zusatzmasse 2 verbunden ist, und eine Sekundärmasse 3, die drehbar an dem Primärblech 1 gelagert ist. Die Lagerung erfolgt in einer U-förmigen Nut, die von einem im wesentlichen Z-förmigen Zentralflansch 9 und dem Primärblech 1 gebildet ist. Zentralflansch 9 und Primärblech 1 sind durch Rohrnieten 10 (exemplarisch beziffert) aneinander fixiert. Des weiteren weisen Primärblech 1 und Zentralflansch 9 Bohrungen 12 (exmplarisch beziffert) auf, die der Befestigung an einer den Zentralflansch in einer Zentralöffnung 13 durchstoßenden Welle dienen.

Das Primärblech 1 weist einen abgewinkelten Bereich 6 (siehe insbesondere Figur 2) auf, an welchem radial außen die Zusatzmasse 2 anliegt. Die radial innenliegende Seite der abgewinkelten Bereiche 6 bilden tangentiale Reibflächen 60 (exemplarisch beziffert), die durch Ausformungen 5 (exemplarisch beziffert) des Primärblechs 1 unterbrochen sind. Diese Ausformungen 5 weisen senkrecht zur Umlaufrichtung des Torsionsschwingungsdämpfers weisende Oberflächen auf, die als Abstützflächen 50 für Schubkolben 17 (exemplarisch beziffert) dienen. Zwischen jeweils zwei Schubkolben 17 sind Federn 18 (exemplarisch beziffert) angeordnet. Die abgewinkelten Bereiche 6 bilden zusammen mit den Ausformungen 5 und der Wandung der Sekundärmasse 2 Federkammern 21 (exemplarisch beziffert), die mit Silikonfett gefüllt sind. Zur Abdichtung der Federkammern dient eine Abdichtung 4, die an einem Flansch 40 des Primärblechs 1 angeklipst ist und hierbei dessen zylinderförmigen Ansatzbereich umgreift.

Über die tangentialen Reibflächen 60 sowie die Ausformungen 5 überträgt somit das Primärblech 1 ein Drehmoment auf die Sekundärmasse 2. Des weiteren weist das Primärblech 1 Nasen 11 (siehe Figur 2) auf, an denen beispielsweise ein Reibring oder ähnliches zur zusätzlichen Dämpfung vorgesehen sein kann. Wie insbesondere anhand dieser Nasen 11 sowie der Ausformungen 5 ersichtlich, eignet sich die Wahl eines blechartigen Grundkörpers in hervorragender Weise, um eine Baugruppe herzustellen, die der Drehmomentübertragung bzw. der Dämpfung bei Torsionsschwingungsdämpfern dient.

Bei vorliegendem Ausführungsbeispiel ist die Zusatzmasse 2 auf das Primärblech 1, insbesondere auf den abgewinkelten Bereich 6 des Primärblechs 1, aufgeschrumpft und mittelbar durch Punktschweißungen fixiert. Die unmittelbare Fixierung der Zusatzmasse 2 erfolgt über ein Geberblech 16, welches seinerseits mit dem Primärblech über Punktschweißungen 14 verbunden ist. Wie insbesondere aus Figur 2 ersichtlich, ist somit die Zusatzmasse neben dem durch das Aufschrumpfen bedingten Reibschluß durch den Flansch 40 des Primärblechs 1 sowie das Geberblech 16 fixiert.

Wie ebenso aus Figur 2 ersichtlich, ist das Geberblech 16 an einer im wesentlichen radialen Oberfläche der Primärmasse 1 befestigt. Darüber hinaus stützt sich das Geberblech an einer radialen Oberfläche der Zusatzmasse 2 ab. Hierdurch deckt es Bohrungen 20 (exemplarisch beziffert) ab, die sich in der Zusatzmasse 2 befinden und einem Auswuchten der Primärmasse dienen. Statt der Bohrung 20 können auch Fräsungen vorgesehen sein, die weniger oder keine Kerbwirkung aufbringen.

Das Geberblech 16 weist Bohrungen 16' auf, die als Signalgeber für eine lagerabhängige Motorsteuerung dienen.

Das Primärblech 1 wird durch Kaltverformen hergestellt, ebenso wie der Zentralflansch 9.

Bei vorliegendem ersten Ausführungsbeispiel wird die Zusatzmasse 2 aus einem Profilstahl mit dem in Figur 2 ersichtlichen Querschnitt hergestellt. Hierbei wird ein entsprechend abgelängtes Teil gebogen und an seinen Enden verschweißt. Anschließend werden auf der Innenseite sowie im Bereich der Anlage eines Anlasserzahnkranzes 15 die Schweißnähte in einem kalibrierenden Arbeitsschritt entfernt. In einem nächsten Arbeitsschritt wird die Zusatzmasse 2 erwärmt, so daß sie sich ausdehnt und mit ihrem im wesentlichen zylinderförmigen Innenflächenbereich auf dem abgewinkelten Bereich 6 des Primärblechs 1 in Anlage an den Flansch 40 aufgesetzt. Beim Abkühlen schrumpft die Zusatzmasse 2 und geht mit dem Primärblech 1 einen Reibschluß ein. Im Anschluß daran wird der Anlasserzahnkranz 15 angebracht und die so bereitgestellte Primärmasse ausgewuchtet.

Abschließend wird das Geberblech 16 an dem Primärblech 1 punktverschweißt.

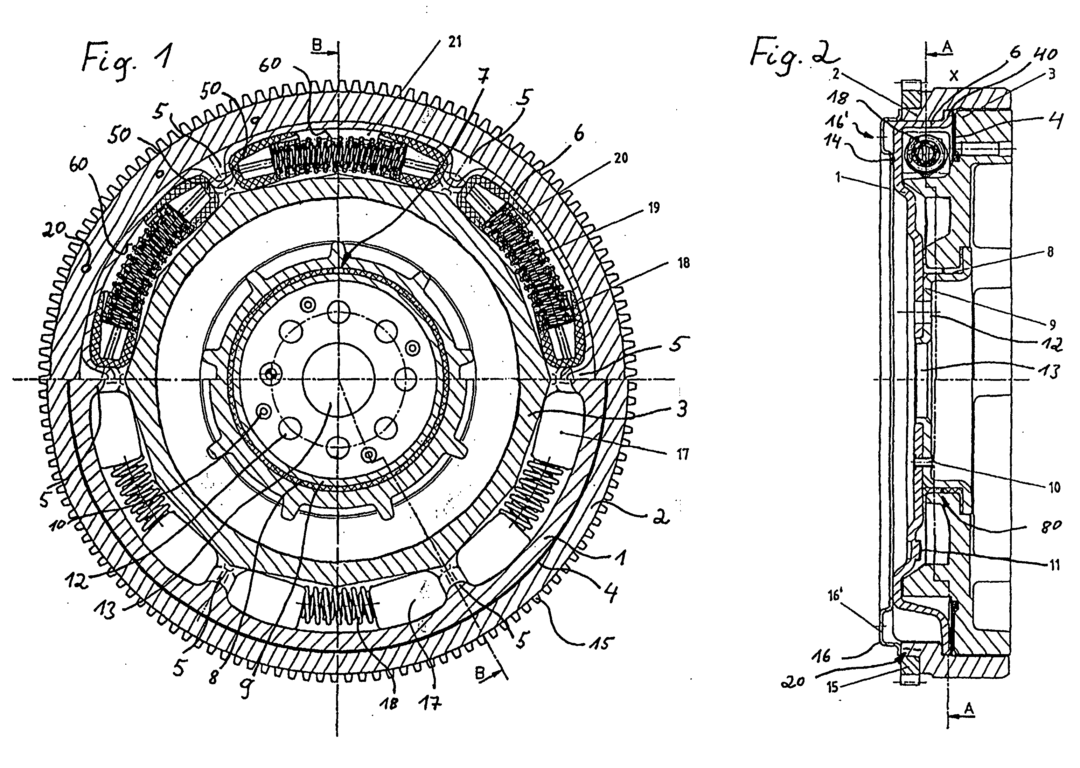

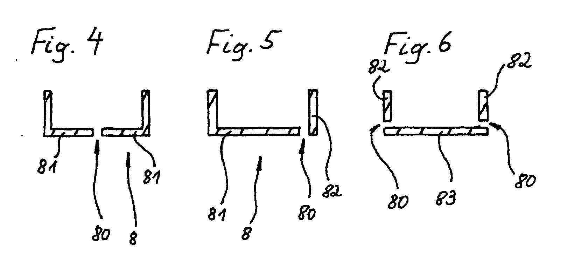

Wie die die Schwungmasse 3 lagernde Nut weist auch eine in dieser angeordnete Lagerbuchse 8 einen im wesentlichen U-förmigen Querschnitt auf (siehe Figur 4). Sie ist einerseits in Umfangsrichtung an der mit 7 bezeichneten Stelle (siehe Figur 1) unterbrochen. Sie weist des weiteren einen Längsschlitz 80 in Umfangrichtung auf (siehe Figur 4) und umfaßt somit zwei Gleitringe 81 mit im wesentlichen L-förmigem Querschnitt. Dieses gewährleistet einerseits, daß das Lager verhältnismäßig einfach montiert werden kann, indem die beiden Gleitringe 81 beidseits der Sekundärmasse 3 angeordnet werden. Andererseits besteht die Möglichkeit, daß die Lagerbuchse 8 bei Erwärmung expandieren kann.

Die Verwendung zweier gleichartiger Gleitringe 81 hat zudem eine Kostenersparnis zum Vorteil. Beide Gleitringe 81 bestehen aus gleitmodifizertem Stanyl.

Die in Figur 5 dargestellte Ausführungsform weist nur einen Gleitring 81 auf. Zur Kupplung hinweisend (in der Zeichnung rechts) ist eine Gleitscheibe 82 vorgesehen, die aus einem nicht gleitmodifizierten Stanyl besteht. Hierdurch kann diese Lagerbuchse 8 verhältnismäßig kostengünstig hergestellt werden, indem der kupplungsseitig geringeren Belastung der Lagerbuchse 8 Rechnung getragen wird. Je nach konkreter Ausgestaltung kann auch auf die Gleitscheibe 82 zur Gänze verzichtet werden.

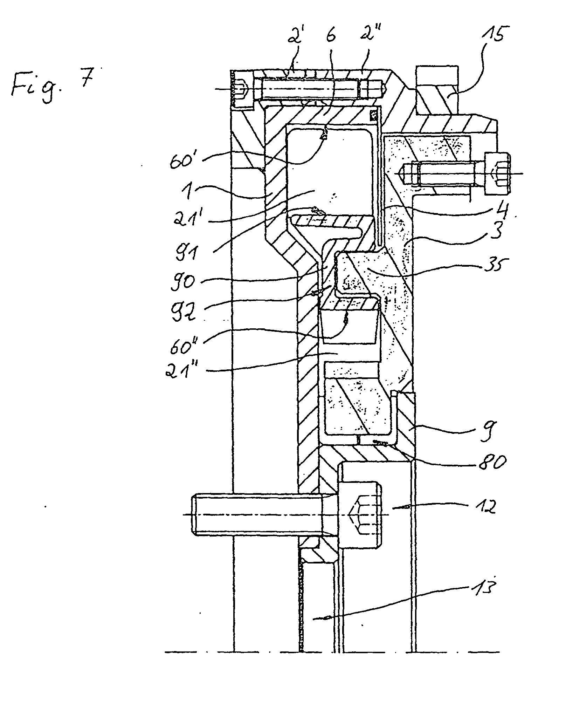

Andererseits kann auch der Gleitring 81 des in Figur 5 dargestellten Ausführungsbeispiels durch eine Gleitbuchse 83 und eine weitere Gleitscheibe 82 ersetzt werden, wie in Figur 6 dargestellt. Hierdurch ergibt sich ein noch größerer Spielraum bei der Materialwahl. Des weiteren sind bei dieser Ausführungsform die Möglichkeiten einer thermischen Expansion größer.

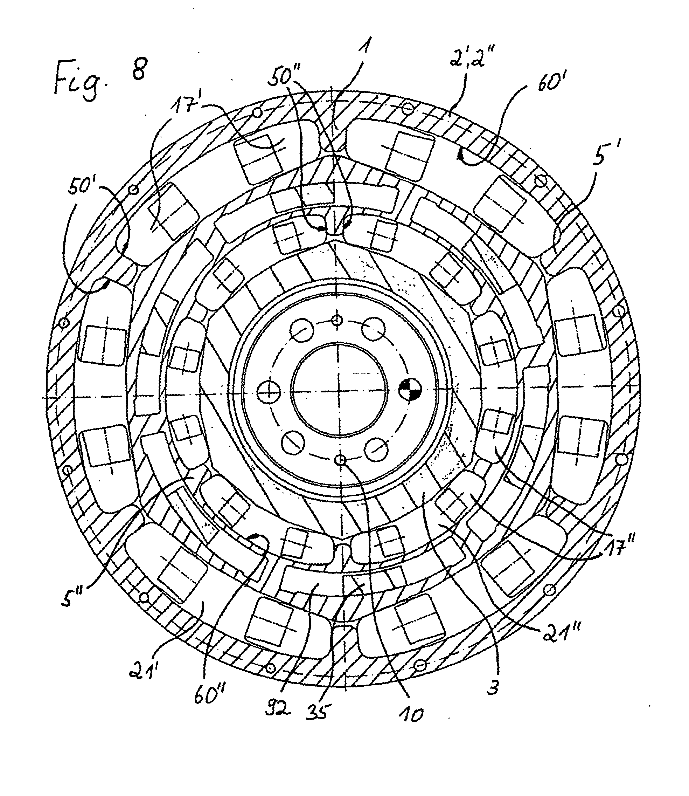

Bei der in Figuren 7 bis 9 dargestellten zweiten Ausführungsform sind zwei Schubkolbenfedereinrichtungen in Reihe hintereinander geschaltet. Hierbei sind in den Figuren Baugruppen, die die gleiche Funktion aufweisen, wie bei der ersten Ausführungsform, mit den gleichen Ziffern versehen, wobei Baugruppen, die in ihrer Funktion mehrfach auftreten, durch Striche unterschieden werden.

Der in Figuren 7 bis 9 dargestellte Torsionsschwingungsdämpfer weist eine erste Schubkolbenfedereinrichtung auf, die Schubkolben 17' umfaßt, die in Federkammern 21' des Primärblechs 1 angeordnet sind. Diese erste Schubkolbenfedereinrichtung wechselwirkt ihrerseits mit einer Zwischenbaugruppe 90, und zwar bei dieser Ausführungsform mit einer äußeren Mantelfläche 91 dieser Zwischenbaugruppe 90.

Die Zwischenbaugruppe 90 ihrerseits weist Federkammern 21" auf, in denen weitere Schubkolben 17" angeordnet sind, die gemeinsam mit entsprechenden Federn eine zweite Schubkolbenfedereinrichtung bilden. Diese Schubkolbenfedereinrichtung ihrerseits wechselwirkt mit der Sekundärmasse 3, und zwar bei diesem Ausführungsbeispiel ebenfalls mit einer in Umfangsrichtung laufenden Mantelfläche.

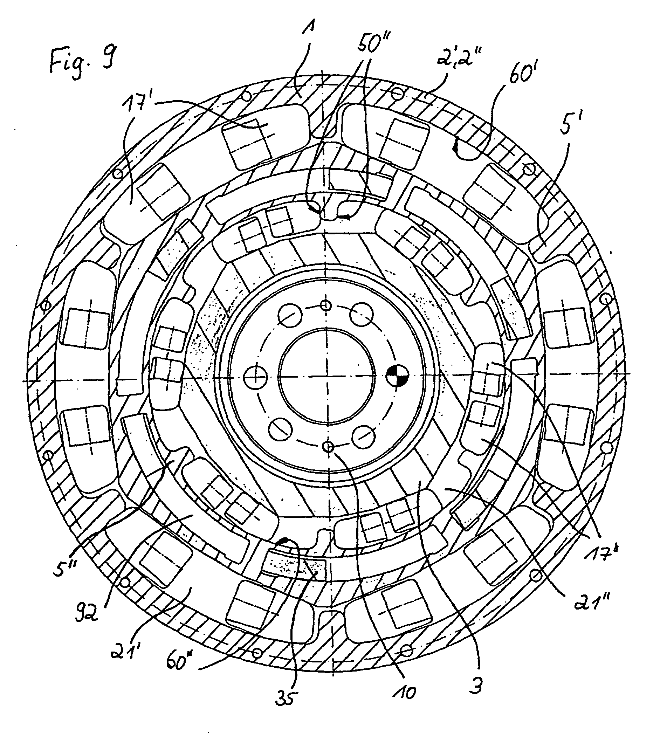

Die Zwischenbaugruppe 90 umfaßt desweiteren Ausnehmungen 92 (exemplarisch beziffert), in welche Nasen 35 (exemplarisch beziffert) der Sekundärmasse 3 eingreifen. Bei einer Relativdrehung zwischen Sekundärmasse 3 und Zwischenbaugruppe 90 gelangen die Nasen 34 bei einem bestimmten Verdrehwinkel an dem Rand der Ausnehmungen 92 zur Anlage, wodurch ein Anschlag gebildet ist, der eine Kompression der zweiten Schubkolbenfedereinrichtung über diesen bestimmten Verdrehwinkel hinaus verhindert. Auf diese Weise wird ein Torsionsschwingungsdämpfer geschaffen, dessen Feder-Dämpfungs-Charakteristik bei Verdrehwinkeln, die über dem bestimmten Verdrehwinkel liegen, durch die erste Schubkolbenfedereinrichtung beherrscht wird. Wie insbesondere aus Figur 9 ersichtlich, wird das Verhalten des Torsionsschwingungsdämpfers bei Verdrehwinkeln unter diesem bestimmten Verdrehwinkel vornehmlich durch die zweite, sich stärker komprimierende Schubkolbenfedereinrichtung beherrscht.

Figur 10 zeigt die sowohl bei der ersten als auch bei der zweiten Ausführungsform erfindungsgemäß eingesetzte Sekundärmassenvariante 3a, die radiale Ausnehmungen 30 aufweist. Durch diese Ausnehmungen werden thermische Materialspannungen derart reduziert, daß die Sekundärmasse 3a verhältnismäßig kostengünstig aus Grauguß hergestellt werden kann.

## Patentansprüche

1. Torsionsschwingungsdämpfer mit einer Primärmasse (1, 2), welche ein Primärblech umfasst und mit einer aus Grauguss gefertigten Sekundärmasse (3), die über eine Schubkolbenfederung in Federkammern (18) miteinander wechselwirken, welche Federkammern durch abgewinkelte Bereiche und Ausformungen des Primärblechs gebildet werden, ***gekennzeichnet durch*** radiale Ausnehmungen (30) in der Sekundärmasse (3), die sich über die Breite der Sekundärmasse (3) nach radial außen öffnen.

2. Torsionsschwingungsdämpfer nach Anspruch 1, ***dadurch gekennzeichnet, dass*** die Sekundärmasse (3), vorzugsweise unmittelbar, einer Wärmebelastung unterliegt, die von einer mit dem Torsionsschwingungsdämpfer wirkverbundenen Kupplung ausgeht.

3. Torsionsschwingungsdämpfer nach Anspruch 1 oder 2, ***dadurch gekennzeichnet, dass*** die radialen Ausnehmungen (30) im Bereich einer an die Sekundärmasse (3) vorgesehenen Reibfläche angeordnet sind.

4. Torsionsschwingungsdämpfer nach einem der Ansprüche 1 bis 3, ***dadurch gekennzeichnet, dass*** die radialen Ausnehmungen (30) radial außen angeordnet sind.

## Claims

1. A torsional vibration damper with a primary mass (1, 2) including a primary sheet metal and with a secondary mass (3) made from gray cast iron that interact with one another in spring chambers (18) through a pusher piston spring system, said spring chambers being formed by angled regions and shaped areas of the primary sheet metal, ***characterized by*** radial recesses (30) in the secondary mass (3) that open radially outwards across the width of the secondary mass (3).

2. The torsional vibration damper according to claim 1, ***characterized in that*** the secondary mass (3) is preferably directly subjected to a heat load generated by a clutch that is work-connected to the torsional vibration damper.

3. The torsional vibration damper according to claim 1 or 2, ***characterized in that*** the radial recesses (30) are disposed in the region of a frictional surface provided on the secondary mass (3).

4. The torsional vibration damper according to one of the claims 1 to 3, ***characterized in that*** the radial recesses (30) are disposed radially outwards.

## Revendications

1. Amortisseur de vibrations de torsion avec une masse primaire (1, 2) qui comprend une tôle primaire et avec une masse secondaire (3) réalisée en fonte grise qui interagissent l'une avec l'autre par l'intermédiaire d'un système de ressorts à poussoir dans des chambres de ressorts (18), ces chambres de ressorts étant formées par des régions coudées et des déformations de la tôle primaire, ***caractérisé par*** des évidements radiaux (30) ménagé dans la masse secondaire (3) qui s'ouvrent radialement sur l'extérieur sur toute la largeur de la masse secondaire (3).

2. Amortisseur de vibrations de torsion selon la revendication 1, ***caractérisé en ce que*** la masse secondaire (3) est, de préférence directement, soumise à une charge thermique générée par l'embrayage agissant conjointement avec l'amortisseur de vibrations de torsion.

3. Amortisseur de vibrations de torsion selon la revendication 1 ou 2, ***caractérisé en ce que*** les évidements (30) radiaux sont disposés dans la région d'une surface de frottement prévue sur la masse secondaire (3).

4. Amortisseur de vibrations de torsion selon l'une quelconque des revendication 1 à 3, ***caractérisé en ce que*** les évidements radiaux (30) sont disposés radialement à l'extérieur.
